# EUROPEAN PATENT APPLICATION

(11) **EP 3 229 426 A1**
(43) Date of publication of application: **11.10.2017**
(21) Application number: 16861416.2
(22) Date of filing: 30.09.2016
(51) Int. Cl.: H04L 12/931, H04L 12/933

(54) **UPLINK DATA PACKET FORWARDING METHOD AND APPARATUS, AND DOWNLINK DATA PACKET FORWARDING METHOD AND APPARATUS**

(30) Priority: 06.11.2015 CN 201510750130
(71) Applicant: Phicomm (Shanghai) Co., Ltd., Shanghai 201616 (CN)
(72) Inventor: GUAN, Jianzhi, Shanghai 201616 (CN)
(74) Representative: Sun, Yiming
(86) International application number: PCT/CN2016/101383
(87) International publication number: WO 2017/076148

(57) **Abstract**

The present disclosure provides an uplink data packet forwarding method and apparatus, and a downlink data packet forwarding method and apparatus, wherein a kernel network interface is provided with an interface attribute, the interface attribute including an interface name and an interface type, the interface type including a local area network interface and a wide area network interface; when the interface type is a local area network interface, the kernel network interface is further provided with an interface tag, the interface tag including an interface name and an interface serial number; and the uplink data packet forwarding method includes: receiving, by the kernel network interface whose interface type is a local area network interface, a to-be-forwarded data packet; judging, according to the interface serial number of the kernel network interface receiving the to-be-forwarded data packet, whether the kernel network interface receiving the to-be-forwarded data packet is in a binding state; and if the kernel network interface receiving the to-be-forwarded data packet is in a binding state, adding the interface tag of the kernel network interface to the to-be-forwarded data packet, and forwarding the to-be-forwarded data packet with the added interface tag to the kernel network interface whose interface type is a wide area network interface. The uplink or downlink data packet forwarding method has the advantages of simple forwarding process, accurate forwarding and high efficiency.

## Description

### TECHNICAL FIELD

The present disclosure relates to the technical field of communications, and in particular, to an uplink data packet forwarding method and apparatus, and a downlink data packet forwarding method and apparatus.

### BACKGROUND

Rapid developments of Internet network traffic, scale and application cause a great challenge to the design of Internet core routers. With the tremendous growth of the optical fiber bandwidth and the increase of the number of accessed hosts, the switching capacity and port density of the routers fail to adapt to the growth of the network traffic. With the dramatic expansion of the network scale, the forwarding capability of the routers fails to adapt to the exponential growth of the forward information base (FIB) capacity. As the IPv6, quality of service (QoS), multicast, security and the like applications develop, the packet processing capability of the routers fails to address the conflict between the growth of the network traffic and the increase of the packet processing complexity.

To accommodate the above needs, the uplink multi-line access technology has been employed in the industry. That is, multi-access broadband routers using the parallel processing technology are introduced to application, and the parallel system provides an effective way for the improvement of the forwarding and switching capabilities of the routers. A broadband access router is a network address translation (NAT) device that is connected to the Internet broadband network, and typically has multiple local area network (LAN) interfaces and one wide area network (WAN) interface. The WAN interface is configured to be connected to the Internet broadband network, and the LAN interface is configured to allow local area network users to access.

However, in an enterprise-class access point (AP) application scenario, due to requirements of the application scenario and security, sometimes more than one service set identifier (SSID) may be deployed, and each SSID is bound to different virtual local area network (VLAN) through a Linux bridge. That is, an SSID interface is bound to a VLAN interface via the bridge. The binding may be specifically acquired from an interface list of the bridge including the binding relationship between SSIDs and VLAN interfaces. For example, all the SSIDs accessing the office network are bound to one VLAN, and all the SSIDs accessing the Internet are bound to another VLAN.

In uplink data packet processing during data packet forwarding, the data packets received by different SSIDs are respectively tagged with corresponding VLAN tags, and then forwarded to the WAN interface in the uplink network. To be specific, the uplink data packet processing includes the following steps: receiving a data packet by a VLAN interface; determining which bridge the network interface receiving the data packet belongs to; querying an interface list of the bridge; performing VLAN tag processing using the 802.1q module; and sending the data packet to the WAN interface.

In downlink data packet processing during data packet forwarding, the data packets received from different VLAN interfaces are respectively forwarded to the corresponding VLAN interface in the downlink network after the VLAN tags of the data packets are removed. To be specific, the downlink data packet processing includes the following steps: receiving a data packet by a WAN interface; performing VLAN tag processing using the 802.1q module; determining which bridge the network interface receiving the data packet belongs to; querying an interface list of the bridge; and sending the data packet to the WLAN interface.

The above data packet forwarding method has the following defects:
First, the configurations are complicated. Each time before the VLAN binding configuration of the SSID is modified, the binding relationship is needed for the cancel operation, then a bridge, a WAN and a VLAN interface need to be created according to the new configurations, and finally a dependence relationship between the VLAN interface and the bridge is configured.
Second, the forwarding efficiency is low. It is required to identify the bridge which the corresponding VLAN interface receiving the data packets belongs to for each forwarding, and then search for the interface list in the bridge.

### SUMMARY

In view of the above defects, the present disclosure is intended to provide an uplink data packet forwarding method and apparatus, and a downlink data packet forwarding method and apparatus, to solve the problems of complicated configurations in data forwarding and low forwarding efficiency.

To achieve the above objectives and other related objectives, the present disclosure provides an uplink data packet forwarding method, wherein a kernel network interface is provided with an interface attribute, the interface attribute including an interface name and an interface type, the interface type including a local area network interface and a wide area network interface; when the interface type is a local area network interface, the kernel network interface is further provided with an interface tag, the interface tag including an interface name and an interface serial number; and the uplink data packet forwarding method includes the following steps:
receiving, by the kernel network interface whose interface type is a local area network interface, a to-be-forwarded data packet;
judging, according to the interface serial number of the kernel network interface receiving the to-be-forwarded data packet, whether the kernel network interface receiving the to-be-forwarded data packet is in a binding state; and
if the kernel network interface receiving the to-be-forwarded data packet is in a binding state, adding the interface tag of the kernel network interface to the to-be-forwarded data packet, and forwarding the to-be-forwarded data packet with the interface tag to the kernel network interface whose interface type is a wide area network interface.

In an embodiment of the present disclosure, if the kernel network interface receiving the to-be-forwarded data packet is in a non-binding state, the to-be-forwarded data packet is directly forwarded to the kernel network interface whose interface type is the wide area network.

In an embodiment of the present disclosure, the interface tag of the kernel network interface is added to the to-be-forwarded data packet using the 802.1 q protocol.

Correspondingly, the present disclosure further provides an uplink data packet forwarding apparatus, wherein a kernel network interface is configured to forward a data packet between a local area network and a wide area network, the kernel network interface being provided with an interface attribute, the interface attribute including an interface name and an interface type, the interface type including a local area network interface and a wide area network interface; the kernel network interface whose interface type is a local area network interface is further provided with an interface tag, the interface tag including an interface name and an interface serial number; and the uplink data packet forwarding apparatus includes:
a first judging unit, connected to the kernel network interface whose interface type is a local area network interface, and configured to judge, according to the interface serial number of the kernel network interface receiving the to-be-forwarded data packet, whether the kernel network interface receiving the to-be-forwarded data packet is in a binding state;
a tag adding unit, connected to the first judging unit, and configured to add the interface tag of the kernel network interface to the to-be-forwarded data packet if the kernel network interface receiving the to-be-forwarded data packet is in a binding state; and
a data packet forwarding unit, connected to the tag adding unit, and configured to forward the to-be-forwarded data packet with the interface tag to the kernel network interface whose interface type is a wide area network interface.

In an embodiment of the present disclosure, the data packet forwarding unit is further connected to the first judging unit, and configured to directly forward the to-be-forwarded data packet to the kernel network interface whose interface type is the wide area network if the kernel network interface receiving the to-be-forwarded data packet is in a non-binding state.

In an embodiment of the present disclosure, the tag adding unit adds the interface tag of the kernel network interface to the to-be-forwarded data packet using the 802.1q protocol.

The present disclosure further provides a downlink data packet forwarding method, wherein a kernel network interface is provided with an interface attribute, the interface attribute including an interface name and an interface type, the interface type including a local area network interface and a wide area network interface; when the interface type is a local area network interface, the kernel network interface is further provided with an interface tag, the interface tag including an interface name and an interface serial number; and the downlink data packet forwarding method includes the following steps:
receiving, by the kernel network interface whose interface type is a wide area network interface, a to-be-forwarded data packet, the to-be-forwarded data packet including an interface tag;
determining, according to the interface tag of the to-be-forwarded data packet, an original interface name and an original interface serial number of the to-be-forwarded data packet;
judging whether the original interface serial number of the to-be-forwarded data packet is the same as a target interface serial number; and
if the original interface serial number of the to-be-forwarded data packet is the same as a target interface serial number, removing the interface tag from the to-be-forwarded data, and forwarding the to-be-forwarded data with the interface tag removed to the kernel network interface corresponding to the target interface serial number.

In an embodiment of the present disclosure, the downlink data packet forwarding method further includes: discarding the to-be-forwarded data packet if the original interface serial number of the to-be-forwarded data packet is different from the target interface serial number.

Correspondingly, the present disclosure further provides a downlink data packet forwarding apparatus, wherein a kernel network interface is configured to forward a data packet between a local area network and a wide area network, the kernel network interface being provided with an interface attribute, the interface attribute including an interface name and an interface type, the interface type including a local area network interface and a wide area network interface; the kernel network interface whose interface type is a local area network interface is further provided with an interface tag, the interface tag including an interface name and an interface serial number; and the uplink data packet forwarding apparatus includes:
a serial number acquiring unit, connected to the kernel network interface whose interface type is a wide area network interface, and configured to receive a to-be-forwarded data packet, and determine, according to an interface tag of the to-be-forwarded data packet, an original interface name and an original interface serial number of the to-be-forwarded data packet;
a second judging unit, connected to the serial number acquiring unit, and configured to judge whether the original interface serial number of the to-be-forwarded data packet is the same as a target interface serial number;
a tag removing unit, connected to the second judging unit, and configured to remove the interface tag from the to-be-forwarded data packet if the original interface serial number of the to-be-forwarded data packet is the same as the target interface serial number; and
a data packet forwarding unit, connected to the tag removing unit, and configured to forward the to-be-forwarded data packet with the interface tag removed to the kernel network interface corresponding to the target interface serial number.

In an embodiment of the present disclosure, the data packet forwarding unit is further connected to the second judging unit, and configured to discard the to-be-forwarded data packet if the original interface serial number of the to-be-forwarded data packet is different from the target interface serial number.

As described above, the uplink data packet forwarding method and apparatus, and the downlink data packet forwarding method and apparatus according to the present disclosure achieve the following beneficial effects:
A kernel network interface is provided with an interface attribute including an interface name and an interface type, wherein the interface type includes a local area network interface and a wide area network interface; and when the interface type is a local area network interface, the kernel network interface is provided with an interface tag including an interface name and an interface serial number. In this way, in the uplink data packet forwarding process, whether the kernel network interface is in a binding state is judged according to the interface serial number of the kernel network interface, and whether a binding relationship is present between the kernel network interface whose interface type is a wide area network interface and the kernel network interface whose interface type is a local area network interface is judged, and when the kernel network interface is in a binding state, the interface tag of the kernel network interface is added to the to-be-forwarded data packet, and the to-be-forwarded data packet with the interface tag is added to the kernel network interface whose interface type is a wide area network. It is convenient for the uplink device to perform the corresponding forwarding and secure processing according to the interface tag, when the wide area network receives the to-be-forwarded data packet to identify the local area network forwarding the data packet according to the interface tag. When the kernel network interface is in a non-binding state, the to-be-forwarded data packet is directly forwarded to the kernel network interface whose interface type is a wide area network, which improves the forwarding efficiency. In the downlink data packet forwarding process, an original interface name and an original interface serial number of the to-be-forwarded data packet are determined according to the interface tag of the to-be-forwarded data packet, the interface tag in the to-be-forwarded data packet is removed when the original interface serial number of the to-be-forwarded data packet is the same as a target interface serial number, and the to-be-forwarded data packet with the interface tag removed is forwarded to the kernel network interface corresponding to the target interface serial number. In this way, the forwarding accuracy is improved.

In addition, the uplink data packet forwarding method and the downlink data packet forwarding method both implement accurate packet forwarding using the interface tag in the to-be-forwarded data packet, it is unnecessary to re-establish a binding relationship when modifying the configuration relationship between the SSID and the local area network, and query a bridge interface list in the data packet forwarding process. This simplifies the data packet forwarding process and improves the forwarding efficiency.

### BRIEF DESCRIPTION OF THE DRAWINGS

FIG. 1 is a schematic flowchart of an uplink data packet forwarding method according to an embodiment of the present disclosure;
FIG. 2 is a schematic structural diagram of an uplink data packet forwarding apparatus according to an embodiment of the present disclosure;
FIG. 3 is a schematic flowchart of a downlink data packet forwarding method according to an embodiment of the present disclosure; and
FIG. 4 is a schematic structural diagram of a downlink data packet forwarding apparatus according to an embodiment of the present disclosure.

### Reference numerals and denotations thereof:

- 1: Uplink data packet forwarding apparatus
- 11: First judging unit
- 12: Tag adding unit
- 13: Data packet forwarding unit
- 2: Downlink data packet forwarding apparatus
- 21: Serial number acquiring unit
- 22: Second judging unit
- 23: Tag removing unit
- 24: Data packet forwarding unit
- S11-S14: Steps
- S21-S26: Steps

### DETAILED DESCRIPTION

The embodiments of the present disclosure are described hereinafter with reference to specific examples. A person skilled in the art would readily understand and know the other advantages and technical effects of the present disclosure based on the content disclosed in the specification of the present disclosure. The present disclosure may also be implemented or applied with reference to other different specific embodiments. Various details in the specification may also be based on different viewpoints and applications, and various modifications or variations may be made without departing from the spirit of the present disclosure. It should be noted that in cases of no conflict, the embodiments and features in the embodiments of the present disclosure may be combined together.

It should be noted that the drawings in the embodiments are merely intended to illustratively explain the basic concept of the present disclosure, and the drawings only illustrate components relevant to the present disclosure and are not drawn according to the quantity of components, the shapes and dimensions thereof in practice. The shape, quantity and scale of the components in practical implementation may be randomly altered, and the deployment of the components may be even more complicated.

In the process of forwarding a data packet between a local area network and a wide area network, a kernel network interface is provided with an interface attribute, the interface attribute includes an interface name and an interface type, the interface type includes a local area network interface and a wide area network interface; and the kernel network interface whose interface type is a local area network interface is further provided with an interface tag, wherein the interface tag includes an interface name and an interface serial number. Accurate packet forwarding is implemented using the interface tag in a to-be-forwarded data packet, which simplifies the data packet forwarding process and improves the forwarding efficiency.

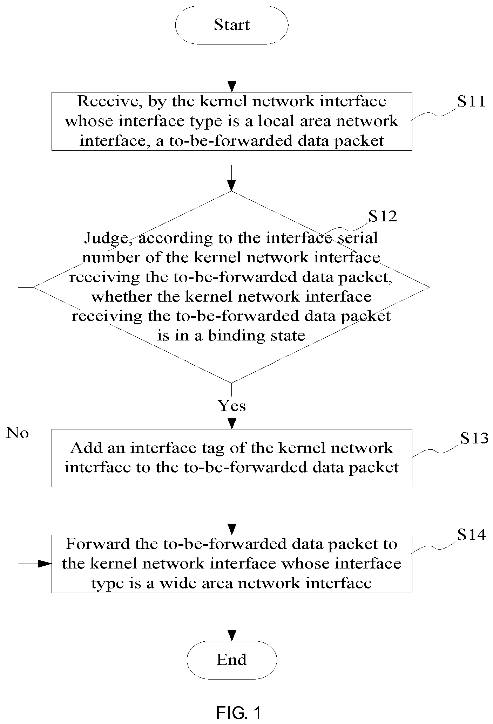

Referring to FIG. 1, FIG. 1 is a schematic flowchart of an uplink data packet forwarding method according to an embodiment of the present disclosure. The uplink data packet forwarding method as illustrated in FIG. 1 includes the following steps:
step S11: receiving, by the kernel network interface whose interface type is a local area network interface, a to-be-forwarded data packet;
step S12: judging, according to the interface serial number of the kernel network interface receiving the to-be-forwarded data packet, whether the kernel network interface receiving the to-be-forwarded data packet is in a binding state; and

In step S12, if the kernel network interface receiving the to-be-forwarded data packet is in a binding state, step S13 is performed to add an interface tag of the kernel network interface to the to-be-forwarded data packet; and then step S14 is performed to forward the to-be-forwarded data packet to the kernel network interface whose interface type is a wide area network interface. If the kernel network interface receiving the to-be-forwarded data packet is in a non-binding state, step S14 is directly performed to forward the to-be-forwarded data packet to the kernel network interface whose interface type is the wide area network.

To be specific, the interface serial number of the kernel network interface which is in the non-binding state may be set to 0. In this case, whether the interface serial number of the kernel network interface receiving the to-be-forwarded data packet is 0 may be judged; if the interface serial number of the kernel network interface receiving the to-be-forwarded data packet is 0, the kernel network interface is in the non-binding state and the kernel network interface is not subjected to a binding relationship; and otherwise, the kernel network interface is subjected to a binding relationship.

In this case, if the interface serial number of the kernel network interface receiving the to-be-forwarded data packet is 0, step S14 is directly performed to forward the to-be-forwarded data packet to the kernel network interface whose interface type is the wide area network. If the interface serial number of the kernel network interface receiving the to-be-forwarded data packet is not 0, step S13 is performed to add an interface tag of the kernel network interface to the to-be-forwarded data packet; and then step S14 is performed to forward the to-be-forwarded data packet to the kernel network interface whose interface type is a wide area network interface.

In this embodiment, the interface tag of the kernel network interface is added to the to-be-forwarded data packet using the 802.1 q protocol. The specific interface tagging method is not described herein any further.

In this embodiment, a kernel network interface is provided with an interface attribute including an interface name and an interface type, wherein the interface type includes a local area network interface and a wide area network interface; and when the interface type is a local area network interface, the kernel network interface is provided with an interface tag including an interface name and an interface serial number. In this way, in the uplink data packet forwarding process, whether the kernel network interface is in a binding state is judged according to the interface serial number of the kernel network interface, so as to determine whether a binding relationship is present between the kernel network interface whose interface type is a wide area network interface and the kernel network interface whose interface type is a local area network interface, and when the interface is in a binding state, the interface tag of the kernel network interface is added to the to-be-forwarded data packet, and the to-be-forwarded data packet with the interface tag is forwarded to the kernel network interface whose interface type is a wide area network. It is convenient for the uplink device to perform the corresponding forwarding and secure processing according to the interface tag, when the wide area network receives the to-be-forwarded data packet to identify the local area network forwarding the data packet according to the interface tag. When the interface is in a non-binding state, the to-be-forwarded data packet is directly forwarded to the kernel network interface whose interface type is a wide area network, which improves the forwarding efficiency. In addition, it is unnecessary to re-establish a binding relationship when modifying the configuration between the SSID and the local area network and query a bridge interface list in the data packet forwarding process. This simplifies the data packet forwarding process and improves the forwarding efficiency.

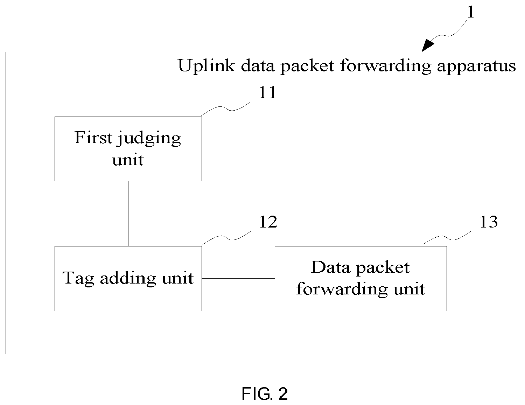

Referring to FIG. 2, FIG. 2 is a schematic structural diagram of an uplink data packet forwarding apparatus 1 according to an embodiment of the present disclosure. A kernel network interface (not illustrated in the drawings) is configured to forward a data packet between a local area network and a wide area network, wherein the kernel network interface is provided with an interface attribute, the interface attribute includes an interface name and an interface type, and the interface type includes a local area network interface and a wide area network interface; and the kernel network interface whose interface type is a local area network interface is further provided with an interface tag, wherein the interface tag includes an interface name and an interface serial number. The uplink data packet forwarding apparatus 1 as illustrated in FIG. 2 includes:
a first judging unit 11, connected to the kernel network interface whose interface type is a local area network interface, and configured to judge, according to the interface serial number of the kernel network interface receiving the to-be-forwarded data packet, whether the kernel network interface receiving the to-be-forwarded data packet is in a binding state;
a tag adding unit 12, connected to the first judging unit 11, and configured to add the interface tag of the kernel network interface to the to-be-forwarded data packet if the kernel network interface receiving the to-be-forwarded data packet is in a binding state; and
a data packet forwarding unit 13, connected to the tag adding unit 12, and configured to forward the to-be-forwarded data packet with the added interface tag to the kernel network interface whose interface type is a wide area network interface.

In this embodiment, the tag adding unit 12 adds the interface tag of the kernel network interface to the to-be-forwarded data packet using the 802.1q protocol. The specific tag adding method is not described herein any further.

In another embodiment, the data packet forwarding unit 13 is further connected to the first judging unit 11, and configured to directly forward the to-be-forwarded data packet to the kernel network interface whose interface type is the wide area network if the kernel network interface receiving the to-be-forwarded data packet is in a non-binding state.

The uplink data packet forwarding apparatus according to this embodiment has the advantages of accurate forwarding and high efficiency. In addition, it is unnecessary to re-establish a binding relationship when modifying the configuration between the SSID and the local area network and query a bridge interface list in the data packet forwarding process. This simplifies the data packet forwarding process and improves the forwarding efficiency.

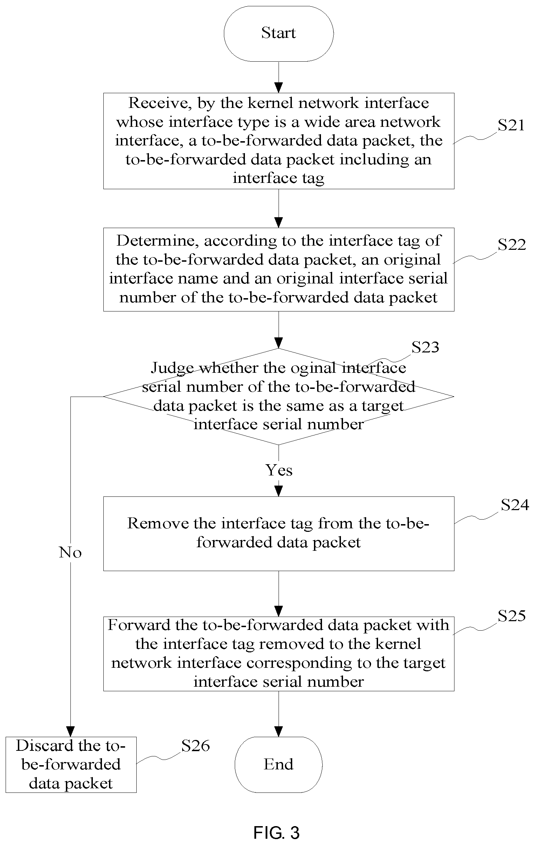

Referring to FIG. 3, FIG. 3 is a schematic flowchart of a downlink data packet forwarding method according to an embodiment of the present disclosure. In the process of forwarding a data packet between a local area network and a wide area network, a kernel network interface is provided with an interface attribute, the interface attribute includes an interface name and an interface type, the interface type includes a local area network interface and a wide area network interface; and the kernel network interface whose interface type is a local area network interface is further provided with an interface tag, wherein the interface tag includes an interface name and an interface serial number. The downlink data packet forwarding method as illustrated in FIG. 3 includes the following steps:
step S21: receiving, by the kernel network interface whose interface type is a wide area network interface, a to-be-forwarded data packet, the to-be-forwarded data packet including an interface tag;
step S22: determining, according to the interface tag of the to-be-forwarded data packet, an original interface name and an original interface serial number of the to-be-forwarded data packet;
step S23: judging whether the original interface serial number of the to-be-forwarded data packet is the same as a target interface serial number; and
if the original interface serial number of the to-be-forwarded data packet is the same as a target interface serial number, performing step 24 to remove the interface tag in the to-be-forwarded data packet, and then performing step S25 to forward the to-be-forwarded data packet with the interface tag removed to the kernel network interface corresponding to the target interface serial number.

In another embodiment, in step S23, if the original interface serial number of the to-be-forwarded data packet is different from the target interface serial number, step S26 is performed to discard the to-be-forwarded data packet.

In this embodiment, a kernel network interface is provided with an interface attribute including an interface name and an interface type, wherein the interface type includes a local area network interface and a wide area network interface; and when the interface type is a local area network interface, the kernel network interface is provided with an interface tag including an interface name and an interface serial number. In this way, in the downlink data packet forwarding process, an original interface name and an original interface serial number of the to-be-forwarded data packet are determined according to the interface tag of the to-be-forwarded data packet, the interface tag in the to-be-forwarded data packet is removed when the original interface serial number of the to-be-forwarded data packet is the same as a target interface serial number, and the to-be-forwarded data packet with the interface tag removed is forwarded to the kernel network interface corresponding to the target interface serial number. In this way, the forwarding accuracy is improved.

Meanwhile, the downlink data packet forwarding method implements accurate packet forwarding using the interface tag in the to-be-forwarded data packet, it is unnecessary to re-establish a binding relationship when modifying the configuration between the SSID and the local area network, and query a bridge interface list in the data packet forwarding process. This simplifies the data packet forwarding process and improves the forwarding efficiency.

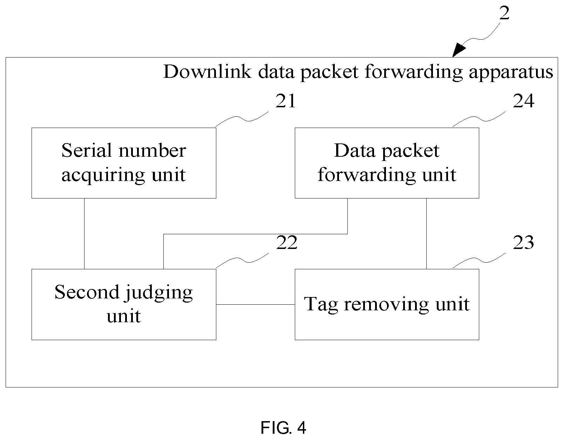

Referring to FIG. 4, FIG. 4 is a schematic structural diagram of a downlink data packet forwarding apparatus 2 according to an embodiment of the present disclosure. A kernel network interface (not illustrated in the drawings) is configured to forward a data packet between a local area network and a wide area network, wherein the kernel network interface is provided with an interface attribute, the interface attribute includes an interface name and an interface type, and the interface type includes a local area network interface and a wide area network interface; and the kernel network interface whose interface type is a local area network interface is further provided with an interface tag, wherein the interface tag includes an interface name and an interface serial number. The downlink data packet forwarding apparatus 2 as illustrated in FIG. 2 includes:
a serial number acquiring unit 21, connected to the kernel network interface whose interface type is a wide area network interface, and configured to receive a to-be-forwarded data packet, and judge, according to an interface tag of the to-be-forwarded data packet, an original interface name and an original interface serial number of the to-be-forwarded data packet;
a second judging unit 22, connected to the serial number acquiring unit 21, and configured to judge whether the original interface serial number of the to-be-forwarded data packet is the same as a target interface serial number;
a tag removing unit 23, connected to the second judging unit 22, and configured to remove the interface tag from the to-be-forwarded data packet if the original interface serial number of the to-be-forwarded data packet is the same as the target interface serial number; and
a data packet forwarding unit 24, connected to the tag removing unit 23, and configured to forward the to-be-forwarded data packet with the interface tag removed to the kernel network interface corresponding to the target interface serial number.

In this embodiment, the data packet forwarding unit 24 is further connected to the second judged unit 22, and configured to discard the to-be-forwarded data packet if the original interface serial number of the to-be-forwarded data packet is different from the target interface serial number.

The downlink data packet forwarding apparatus according to this embodiment has the advantages of accurate forwarding and high efficiency. In addition, it is unnecessary to re-establish a binding relationship when modifying the configuration relationship between the SSID and the local area network, and query a bridge interface list in the data packet forwarding process. This simplifies the data packet forwarding process and improves the forwarding efficiency.

In conclusion, the uplink or downlink data packet forwarding technology according to the present disclosure has the advantages of accurate forwarding and high efficiency. In addition, it is unnecessary to re-establish a binding relationship when modifying the configuration between the SSID and the local area network, and query a bridge interface list in the data packet forwarding process. This simplifies the data packet forwarding process and improves the forwarding efficiency. Therefore, the present disclosure effectively overcomes various defects in the prior art and has high industrial value.

The above embodiments are merely used for exemplarily illustrate the principles, functions and effects of the present disclosure, but are not intended to limiting the present disclosure. Any person skilled in the art would make polishments or modifications to the above embodiments without departing from the spirit and category of the present disclosure. Therefore, any equivalent polishments or modifications derived a person having common knowledge in the art without departing from the spirit and inventive concept of the present disclosure shall all be covered within the scope defined by the claims of the present disclosure.

## Claims

1. An uplink data packet forwarding method, wherein a kernel network interface is provided with an interface attribute, the interface attribute comprising an interface name and an interface type, the interface type comprising a local area network interface and a wide area network interface; when the interface type is a local area network interface, the kernel network interface is further provided with an interface tag, the interface tag comprising an interface name and an interface serial number; and the uplink data packet forwarding method comprises the following steps:
receiving, by the kernel network interface whose interface type is a local area network interface, a to-be-forwarded data packet;
judging, according to the interface serial number of the kernel network interface receiving the to-be-forwarded data packet, whether the kernel network interface receiving the to-be-forwarded data packet is in a binding state; and
if the kernel network interface receiving the to-be-forwarded data packet is in a binding state, adding the interface tag of the kernel network interface to the to-be-forwarded data packet, and forwarding the to-be-forwarded data packet with the added interface tag to the kernel network interface whose interface type is a wide area network interface.

2. The uplink data packet forwarding method according to claim 1, wherein if the kernel network interface receiving the to-be-forwarded data packet is in a non-binding state, the to-be-forwarded data packet is directly forwarded to the kernel network interface whose interface type is the wide area network.

3. The uplink data packet forwarding method according to claim 1, wherein the interface tag of the kernel network interface is added to the to-be-forwarded data packet using the 802.1 q protocol.

4. An uplink data packet forwarding apparatus, wherein a kernel network interface is configured to forward a data packet between a local area network and a wide area network, the kernel network interface being provided with an interface attribute, the interface attribute comprising an interface name and an interface type, the interface type comprising a local area network interface and a wide area network interface; the kernel network interface whose interface type is a local area network interface is further provided with an interface tag, the interface tag comprising an interface name and an interface serial number; and the uplink data packet forwarding apparatus comprises:
a first judging unit, connected to the kernel network interface whose interface type is a local area network interface, and configured to judge, according to the interface serial number of the kernel network interface receiving the to-be-forwarded data packet, whether the kernel network interface receiving the to-be-forwarded data packet is in a binding state;
a tag adding unit, connected to the first judging unit, and configured to add the interface tag of the kernel network interface to the to-be-forwarded data packet if the kernel network interface receiving the to-be-forwarded data packet is in a binding state; and
a data packet forwarding unit, connected to the tag adding unit, and configured to forward the to-be-forwarded data packet with the interface tag to the kernel network interface whose interface type is a wide area network interface.

5. The uplink data packet forwarding apparatus according to claim 4, wherein the data packet forwarding unit is further connected to the first judging unit, and configured to directly forward the to-be-forwarded data packet to the kernel network interface whose interface type is the wide area network if the kernel network interface receiving the to-be-forwarded data packet is in a non-binding state.

6. The uplink data packet forwarding apparatus according to claim 4, wherein the tag adding unit adds the interface tag of the kernel network interface to the to-be-forwarded data packet using the 802.1 q protocol.

7. A downlink data packet forwarding method, wherein a kernel network interface is provided with an interface attribute, the interface attribute comprising an interface name and an interface type, the interface type comprising a local area network interface and a wide area network interface; when the interface type is a local area network interface, the kernel network interface is further provided with an interface tag, the interface tag comprising an interface name and an interface serial number; and the downlink data packet forwarding method comprises the following steps:
receiving, by the kernel network interface whose interface type is a wide area network interface, a to-be-forwarded data packet, the to-be-forwarded data packet comprising an interface tag;
determining, according to the interface tag of the to-be-forwarded data packet, an original interface name and an original interface serial number of the to-be-forwarded data packet;
judging whether the original interface serial number of the to-be-forwarded data packet is the same as a target interface serial number; and
if the original interface serial number of the to-be-forwarded data packet is the same as a target interface serial number, removing the interface tag from the to-be-forwarded data, and forwarding the to-be-forwarded data with the interface tag removed to the kernel network interface corresponding to the target interface serial number.

8. The downlink data packet forwarding method according to claim 7, further comprising: discarding the to-be-forwarded data packet if the original interface serial number of the to-be-forwarded data packet is different from the target interface serial number.

9. A downlink data packet forwarding apparatus, wherein a kernel network interface is configured to forward a data packet between a local area network and a wide area network, the kernel network interface being provided with an interface attribute, the interface attribute comprising an interface name and an interface type, the interface type comprising a local area network interface and a wide area network interface; the kernel network interface whose interface type is a local area network interface is further provided with an interface tag, the interface tag comprising an interface name and an interface serial number; and the downlink data packet forwarding apparatus comprises:
a serial number acquiring unit, connected to the kernel network interface whose interface type is a wide area network interface, and configured to receive a to-be-forwarded data packet, and determine, according to an interface tag of the to-be-forwarded data packet, an original interface name and an original interface serial number of the to-be-forwarded data packet;
a second judging unit, connected to the serial number acquiring unit, and configured to judge whether the original interface serial number of the to-be-forwarded data packet is the same as a target interface serial number;
a tag removing unit, connected to the second judging unit, and configured to remove the interface tag from the to-be-forwarded data packet if the original interface serial number of the to-be-forwarded data packet is the same as the target interface serial number; and
a data packet forwarding unit, connected to the tag removing unit, and configured to forward the to-be-forwarded data packet with the interface tag removed to the kernel network interface corresponding to the target interface serial number.

10. The downlink data packet forwarding apparatus according to claim 9, wherein the data packet forwarding unit is further connected to the second judging unit, and configured to discard the to-be-forwarded data packet if the original interface serial number of the to-be-forwarded data packet is different from the target interface serial number.
